# EUROPEAN PATENT SPECIFICATION

(11) **EP 1 599 268 B1**
(45) Date of publication and mention of the grant of the patent: **28.11.2007**
(21) Application number: 04713121.4
(22) Date of filing: 20.02.2004
(51) Int. Cl.: B01D 21/00

(54) **SOLIDS SEPARATION AND TANK THEREFOR**
FESTSTOFFTRENNUNG UND BEHÄLTER DAFÜR
SEPARATION DE SOLIDES ET CUVE PREVUE A CET EFFET

(30) Priority: 21.02.2003 GB 0304036
(43) Date of publication of application: 30.11.2005
(73) Proprietor: Siltbuster Limited, Monmouth NP25 5JA (GB)
(72) Inventor: COULTON, Richard Henry, Osbaston, Monmouth NP25 3NW (GB)
(74) Representative: Bardo, Julian Eason
(86) International application number: PCT/GB2004/000687
(87) International publication number: WO 2004/073830

(56) References cited:
- EP-A- 0 423 964
- EP-A- 0 636 396
- EP-A- 0 642 817
- WO-A-96/37273
- FR-A- 2 483 799
- GB-A- 386 312
- GB-A- 2 150 039
- GB-A- 2 280 125
- US-A- 2 573 615
- US-A- 5 536 409

## Description

This invention relates to a tank for separating solids from a suspension of the solids in a liquid and to a method of separating solids from a suspension.

In a known process for removing solids suspended in water the water is first often treated with a chemical floculant coagulant, or other chemical reagent to enhance sedimentation. The suspension is then passed to some kind of settlement tank where the solids are allowed to settle out from the rest of the water. In its simplest form such a settlement tank can just be a rectangular or circular plain tank. Such plain tanks are, however, required to have a very large area to handle a given flow rate of effluent and that can make their use awkward or impossible.

In order to reduce the required tank area, it is known to fit inclined plates in an upper region of a tank. Such plates increase the effective surface area of the tank enabling a given area of tank to handle a greater flow of effluent than could be handled by a plain tank of the same size. In order to remove the solids from the tank, the base of the tank is formed into the shape of a hopper with the walls sloping at an angle of at least 45 degrees to the horizontal so that solids settling in the tank slide down the walls of the hopper and are extracted at the bottom thereof. Examples of this type of embodiment can be found in GB 386312 and in FR 2486799. Because of the steep inclination of the hopper walls, the hopper part of the settlement tank has to be relatively deep, which in turn means that the overall depth of the tank has to be relatively high. If it is desired to omit the hopper walls then it becomes necessary to have a solids outlet that is driven by a prime mover across the surface of the bottom of the tank. FR 2483799 discloses an arrangement including a moving conveyor belt on which the sludge settles and is then taken to a collection point. Such an arrangement is expensive and complicated, and especially undesirable as it is in other respects unnecessary to have any moving parts associated with the tank.

It is an object of the invention to provide a relatively compact tank for separating solids from a suspension of the solids in liquid.

According to a first aspect of invention there is provided a tank for separating solids from a suspension of the solids in liquid, the tank having an upper region containing a multiplicity of inclined plates and a lower region for collecting solids settling from the upper region, the lower region having a bottom which is approximately level, the tank further including an inlet for introducing the suspension into the tank and a liquid outlet and characterised in that the tank further includes a plurality of solids outlets at different fixed positions at the bottom of the tank for removing solids separated in the tank.

By providing a plurality of solids outlets at different fixed positions at the bottom of the tank for removing solids separated in the tank it is no longer necessary to provide steeply sloping walls to the bottom of the tank since the solids that settle need not slide down the bottom walls of the tank, and, furthermore, that can be achieved without introducing moving parts driven by a prime mover into the tank. Thus the bottom of the tank is approximately level and therefore the depth of the lower region can be relatively small.

An approximately level tank bottom increases the extent to which the depth of the lower region can be reduced.

The lower region may have a depth less than that of the upper region. The depth of the lower region may be less than 1m and the overall depth of the tank may be less than 2.5m. In an embodiment of the invention described below the depth of the lower region is less than 0.6m.

During use, solids settle over the whole of the bottom of the tank, but are removed only at the solids outlets. As a result piles of solids build up on the bottom of the tank. The height that such piles reach is determined by the positions of the solids outlets since the edges of the piles will be at the outlets and the sides of the piles will be inclined at the angle of repose for the solids. At that inclination, any further solids deposited at the top of a pile are liable to slide down the side of the pile. It is preferred that piles of solids do not extend above the lower region of the tank and there is therefore a relationship between the desired depth of the lower region and the spacing of the solids outlets.

Conveniently the plurality of solids outlets are defined by a plurality of outlets in side or end walls near the bottom of the tank. The outlets are preferably spaced apart by a distance not greater than 2 times the local depth of the lower region.

The inclined plates are preferably inclined to the horizontal at an angle sufficient that in at least some uses solids settling from the liquid slide down the plates. The plates may be inclined at an angle of more than 45 degrees to the horizontal.

In some applications where some (or even all) of the solids are less dense than water, some solids (or even all the solids) and/or liquid waste material may collect on the top of the tank and be separated off from the top. In such a case it is desirable that the liquid outlet of the tank is below the liquid level in the tank or that the liquid outlet is placed beyond a baffle that extends both above and below the liquid level in the tank.

A tank according to the invention can be relatively compact and may therefore be provided as a mobile unit. The tank preferably further includes lifting devices for enabling the tank to be engaged by load handling equipment. Preferably the lifting devices allow the engagement of crane hooks and/or forks of a fork lift truck. In an embodiment of the invention described below lifting eyes are provided for engagement by crane hooks and lifting channels are provided for engagement by forks of a fork lift truck.

According to the first aspect of the invention there is also provided a method of separating solids from a suspension of the solids in liquid, the method including the following steps:
providing a tank having an upper region containing a multiplicity of inclined plates and a lower region having a bottom which is approximately flat,
feeding the suspension of the solids into the tank, solids in the suspension sliding down the inclined plates and collecting over the bottom of the tank,
removing liquid from the tank, and characterised by removing solids from the tank,
characterised in that the solids are removed from the tank through a plurality of outlets at different fixed positions at the bottom of the tank.

The method is preferably carried out using a tank as defined above.

Preferably the tank is mobile and is used at one site after another. Thus, the method preferably further includes the step of subsequently moving the tank to a new site and repeating the feeding, liquids removing and solids removing steps at the new site.

It should be understood that a feature described with respect to the second aspect of the invention may also be employed, where appropriate, in the first aspect of the invention and *vice versa.*

By way of example, certain embodiments of the invention will now be described with reference to the accompanying drawings, of which:
- Fig. 1: is a perspective, partly cut-away, view of a mobile clarifier tank embodying the first aspect of the invention;
- Fig. 2: is a sectional side view of the tank of Fig. 1;
- Fig. 3: is a sectional end view of the tank of Fig. 1;
- Fig. 4: is a perspective, partly cut-away, view of a modified form of mobile clarifier tank embodying the first aspect of the invention; and
- Fig. 5: is a sectional end view of the tank of Fig. 4.

The clarifier tanks shown in the drawings may be used as part of a system for removing dissolved solids from water, in which the water is first treated to precipitate the solids, which are then separated from the water, with or without the benefit of floculant, coagulant or other chemical addition . After such treatment, it is necessary to separate the flocs from the water and a standard method of achieving this includes the use of a clarifier tank in which the flocs are allowed to settle.

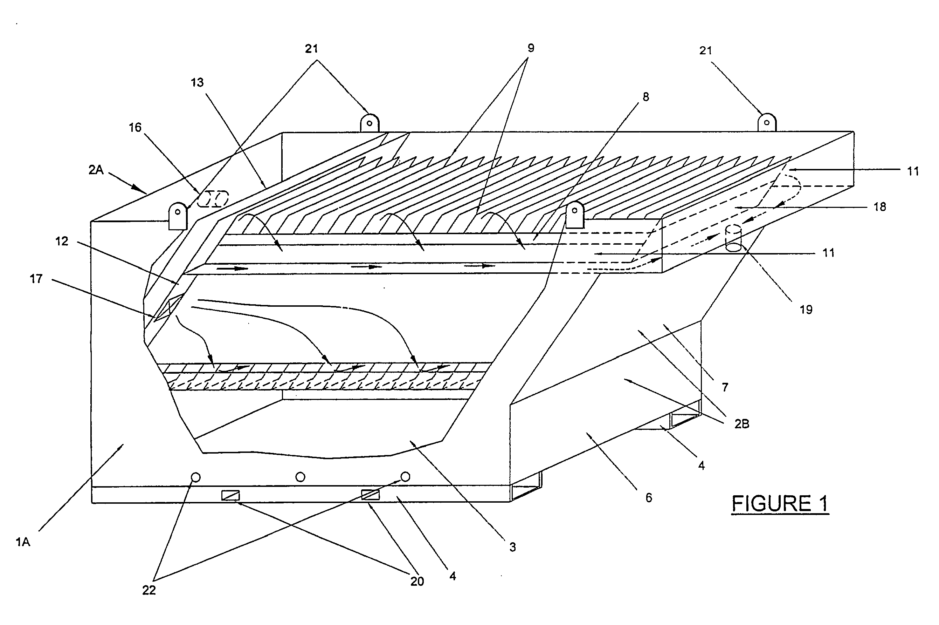

The clarifier tank that is shown in Figs. 1 to 3 is suitable for that purpose as will now be described. The tank is of approximately rectangular shape having side walls 1A, 1B, end walls 2A, 2B and a bottom 3. The tank has an open top.

Part of the way up, the end wall 2B of the tank changes from a lower vertical portion 6 to an upper, outwardly inclined, portion 7.

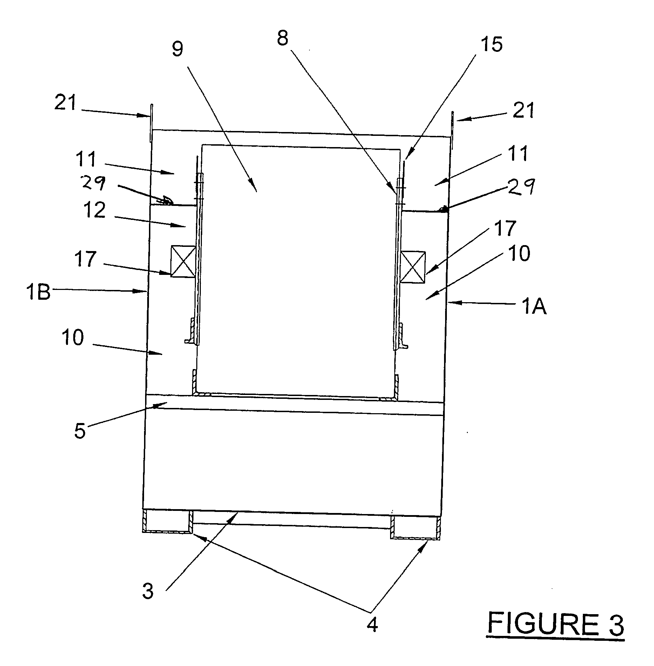

A multiplicity (in this particular example 51) of spaced lamella plates 9 which are inclined at the same angle as the inclined portion 7 are located on supports formed on the opposing faces of the side sheets 8. As can be seen in Fig. 3, the lamella plate assembly is narrower than the interior of the tank and there are spaces between the side walls 1A, 1B of the tank and the sheets 8 of the lamella plate assembly. Towards the top of the lamella plate assembly horizontal plates 29 extend across the spaces, dividing the spaces into lower side regions 10 and upper side channels 11.

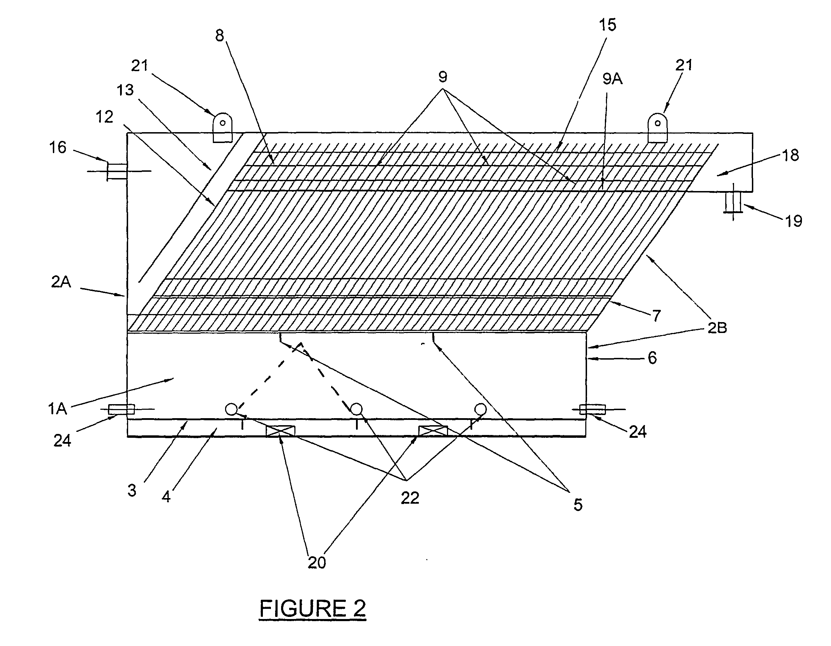

As can be seen in Figs. 1 and 2, the plates 9 extend to the end wall 2B of the tank and indeed at that end the plates extend beyond the top of the inclined portion 7 of the end wall and in part define a projecting top end portion 11 of the tank. On the other hand, the plates do not extend to the end wall 2A of the tank but rather terminate at an inclined support plate 12 that extends across the whole width of the tank and defines an end face of the lamella plate assembly. Spaced from and parallel to the support plate 12 is a baffle plate 13 which also extends across the whole width of the tank. As can be seen in Fig. 2, the support plate 12 extends down to the end wall 2A of the tank whereas the baffle plate 13 terminates short of the end wall 2A.

The lamella plates 9 project above the tops of the side sheets 8 and also above the tops of side weir plates 15 that are fastened along the sides of each of the sheets 8 and are adjustable in height. In use the weir plates are adjusted so that their top surfaces are horizontal and at the same height whether or not the tank is resting on level ground.

An inlet 16 is provided near the top of the end wall 2A of the tank in the middle thereof and the support plate 12 is provided with a pair of openings 17 close to its opposite side edges, those openings providing fluid communication between on the one hand a triangular inlet chamber defined between the support plate 12 and the end wall 2A, and on the other hand the lower side regions 10. The lamella plate assembly is closed along its sides up to the height of the tops of the weir plates 15, and open along its bottom and above the weir plates 15.

The upper side channels 11 are closed at one end by the support plate 12 and at the other end lead into an upper end channel 18 having an outlet 19.

The base support sections 4 are each formed with lifting channels 20 in them to accommodate the forks of a fork lift truck. Also the side walls 1A, 1B have four lifting eyes 21 welded thereto to enable the tank to be lifted by a crane.

Solids outlets 22 are provided in each of the side walls 1A, 1B, immediately above the bottom 3 of the tank. The outlets are formed by plugged pipes to which a suction pipe can be connected when desired to remove solids from the region of the outlet, as will be described more fully below. Thus the outlets 22 are in different fixed positions at the bottom of the tank.

As may now be understood, in use, the tank is placed on an appropriate supporting surface that is approximately level, and the weir plates 15 adjusted to the same horizontal level. The inlet 16 of the tank is then connected to the source of effluent and the outlet 19 connected to a pipe for removing treated water. Initially, the solids outlets 22 are closed.

Effluent enters the tank through the inlet 16, passes between the baffle plate 13 and the end wall 2A, and through the openings 17 in the support plate 12. After passing through the opening 17, the effluent flows downwardly to the underneath of the lamella plate assembly where it enters the multiplicity of channels formed between the lamella plates. As the effluent flows slowly upwardly through the channels, the flocs settle out of the flow and slide down the plates into the lower region of the tank. The water from which the flocs have been removed continues to flow upwardly, passes over the weir plates 15 into the upper side channels 11 and then passes out of the outlet 19 via the upper end channel 18.

Solids material settling in the lower region of the tank settles initially over the entire area of the bottom of the tank in an approximately even manner. At intervals, a user connects a suction pump to each of the solids outlets 22 causing solids to be removed from the immediate vicinity of the outlet. As that occurs, other solids further away laterally from the outlet flow down the newly formed walls of solids so that a series of inverted frusto conical shapes formed of solids become defined on the bottom of the tank. The sides of those cones are at the angle of repose for the material and their edges are adjacent to the solids outlets 22. An example of such a shape is shown in dotted outline in Fig. 2. As may be seen from that drawing, the geometry of the tank is such that the apex of the cones do not quite reach the lamella plate assembly.

Once solids are no longer passing out through one of the outlets 22 as it is being drained by the suction pump, that outlet is closed. As further solids deposit, they build up between adjacent apices of cones, until they are next removed as a result of suction through the solids outlet.

If the tank is no longer required at a particular site, it can be emptied by draining through a drain valve 24, possibly leaving some solids in the bottom of the tank. The tank can then be moved to another site and the steps just described repeated. If it is desirable to empty the tank completely, it can be tipped and flushed out with clean water.

In the particular example of tank shown, the overall width of the tank is about 1.2m, the overall length is about 3.3m and the overall height about 1.5m. The height of the lower region of the tank below the lamella plate assembly is about 0.45m. The inclination of the lamella plates 9 is 55 degrees to the horizontal. It will be understood, however, that the tank size can be varied to suit the application. It may for example be increased to the size of a standard freight container, such as a 13716mm (45ft) metric equivalent container, and may be provided with the usual corner fittings of such containers for engagement by load handling equipment.

Especially if the tank is enlarged it may become desirable to add one or more solids outlets partway across the bottom of the tank, rather than only at the sides, in order to avoid solids building up in a pile on the bottom of the tank to a height above the bottom of the lamella plate assembly. Such an additional outlet can conveniently be provided by inserting an open ended pipe through a side wall of the tank immediately above the bottom 3 of the tank, with the open end terminating where it is desired to have the additional outlet. It should be understood that whilst in the described embodiment the positions of the outlets are not in any way adjustable, it is within the scope of the invention to have outlets whose positions can be adjusted but which nonetheless remain in one position during normal operation of the tank and thus can correctly be described as at "fixed" positions.

While the tank has been described with reference to one particular process for separating solids from water, it will be understood that it can be used in other processes where solids are to be separated from water or other liquids.

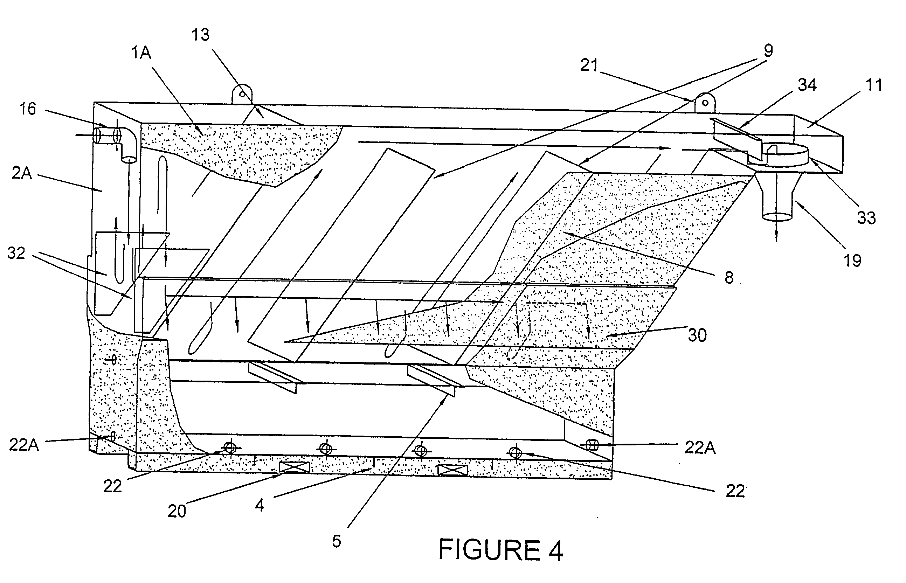

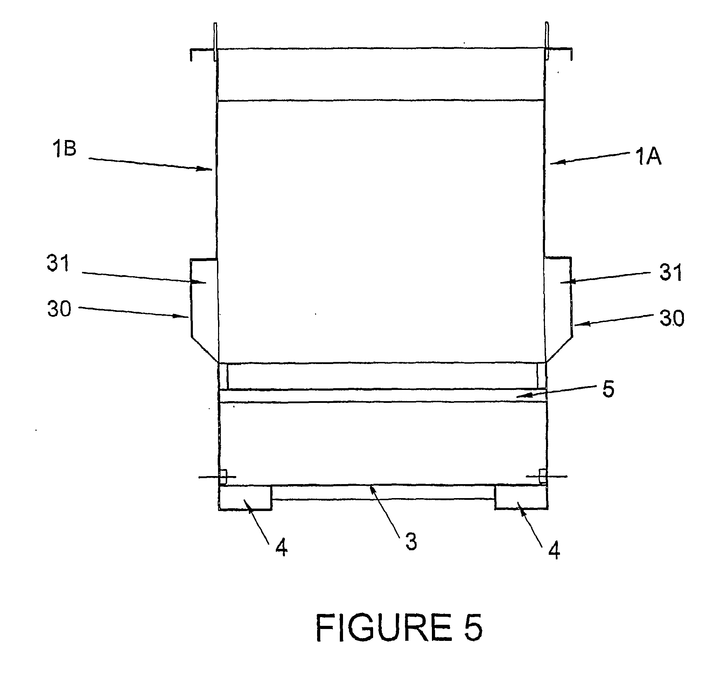

Figs. 4 and 5 show a modified form of tank which is generally of similar construction to the tank shown in Figs. 1 to 3. Parts of the tank shown in Figs. 4 and 5 that are similar or identical to the parts shown in Figs. 1 to 3 are referenced by the same reference numerals and are not described in detail below. The description below focuses on the differences in construction and operation of the modified tank.

The tank of Figs. 4 and 5 differs firstly in the arrangement along each side of the tank. Whereas in the tank of Figs. 1 to 3 the width of the tank is substantially constant throughout its height with the lamella plates 9 spaced from the side walls of the tank, in the modified tank of Figs. 4 and 5, the tank has a wide portion 30 on each side partway up the tank and extending the whole length of the tank. Away from that wide portion the side sheets 8, which support the lamella plates 9 (most of which are not shown in Fig. 4), abut against the side walls of the tank. Thus side channels 31 are formed along opposite sides of the tank. At the end of the tank provided with an inlet 16, the side channels 31 communicate with the region of the tank on the inlet side of the baffle plate 13 which in the modified tank extends across the whole width of the tank, except where it is widened, and also extends down to the end wall 2A. A pair of upstanding inner baffles 32 are provided on each side of the baffle plate 13, spaced from the side walls of the tank. Effluent entering the tank through the inlet 16 passes over the inner baffles 32 into the side channels 31, under the side sheets 8 whose lower edges are above the bottoms of the channels 31 and into the lamella plate assembly.

The tank of Figs. 4 and 5 differs secondly in the arrangement at the top of the tank. Instead of liquid emerging from the top of the lamella plate assembly passing over weir plates 15 into side channels 11, the liquid is confined by the side walls of the tank and the baffle plate 13 to the region above the lamella plate assembly from where it flows directly to a projecting top end portion 11 of the tank. An outlet 19 which has an associated upwardly projecting extension 33 defining a weir outlet is provided in the middle of the end portion 11, and maintains the level of liquid in the tank above the level of the lamella plate assembly. A scum board 34 extends across the tank extending both above and below the liquid level defined by the weir outlet 33 and thereby retains any floating solid or liquid waste on the top of the tank. The arrangement just described does not require a user to adjust weir plates to appropriate level settings; if the tank is placed on sloping ground then small slopes will be accommodated by a variation in level of the liquid above the lamella plates. If the slope is too great, part or all of one or more lamella plates at the inlet end may even project above the liquid, but provided most of the top edges of the plates are immersed, the tank will lose only a small amount of its performance.

It may be noted that the tank of Figs. 4 and 5 is also shown with solids outlets 22A at its ends, in addition to outlets 22 along its sides.

It should be understood that, if desired, some but not all of the modified features described with reference to the tank of Figs. 4 and 5 may be incorporated in a tank generally of the kind shown in Figs. 1 to 3. For example, the tank of Figs. 1 to 3 may retain its straight sides and have the same inlet flow arrangement, whilst adopting an arrangement of the kind shown in Figs. 4 and 5 at the top of the lamella plate assembly.

In any embodiments, the bottom of the tank may be provided with one or more inlets for compressed air or liquid which may be injected into the tank to refluidize any solids that have settled.

It should be understood that whilst various particular embodiments of the invention have been described with reference to the accompanying drawings, it is within the scope of the invention to take a feature described with respect to one embodiment and apply it to another embodiment, where that is appropriate.

## Claims

1. A tank for separating solids from a suspension of the solids in liquid, the tank having an upper region containing a multiplicity of inclined plates (9) and a lower region for collecting solids settling from the upper region, the lower region having a bottom (3) which is approximately level, the tank further including an inlet (16) for introducing the suspension into the tank and a liquid outlet (19) **characterised in that** the tank further includes a plurality of solids outlets (22) at different fixed positions at the bottom (3) of the tank for removing solids separated in the tank.

2. A tank according to claim 1, in which the lower region has a bottom that is approximately level.

3. A tank according to claim 1 or 2, in which the lower region has a depth less than the upper region.

4. A tank according to claim 1 or 2, in which the lower region has a depth of less than 1m.

5. A tank according to any preceding claim, in which the overall depth of the tank is less than 2.5m.

6. A tank according to any preceding claim, in which the plurality of solids outlets (22) are defined by a plurality of outlets in side or end walls near the bottom of the tank.

7. A tank according to claim 6, in which the outlets (22) are spaced apart by a distance not greater than 2 times the local depth of the lower region.

8. A tank according to any preceding claim, further including lifting devices (4, 21) for enabling the tank to be engaged by load handling equipment.

9. A tank according to claim 8, in which the lifting devices include lifting eyes (21) for engagement by crane hooks.

10. A tank according to claim 8 or 9, in which the lifting devices include lifting channels (4) for engagement by forks of a fork lift truck.

11. A method of separating solids from a suspension of the solids in liquid, the method including the following steps:
providing a tank having an upper region containing a multiplicity of inclined plates (9) and a lower region having a bottom (3) which is approximately flat,
feeding the suspension of the solids into the tank, solids in the suspension sliding down the inclined plates and collecting over the bottom of the tank,
removing liquid from the tank,
removing solids from the tank,
**characterised in that** the solids are removed from the tank through a plurality of outlets (22) at different fixed positions at the bottom (3) of the tank.

12. A method according to claim 11, in which the solids collect in a plurality of piles on the bottom of the tank, edges of the piles being defined by the outlets (22).

13. A method according to claim 11 or 12, in which the tank is as claimed in any of claims 1 to 10.

14. A method according to any of claims 11 to 13, further including the step of subsequently moving the tank to a new site and repeating the feeding, liquids removing and solids removing steps at the new site.

## Patentansprüche

1. Tank zum Abtrennen von Feststoffen aus einer Suspension von den Feststoffen in einer Flüssigkeit, wobei der Tank einen oberen Bereich besitzt, der eine Vielzahl von geneigten Platten (9) enthält, und einen unteren Bereich zum Sammeln von Feststoffen, die sich von dem oberen Bereich absetzen, wobei der untere Bereich einen Boden (3) aufweist, der ungefähr auf einer Ebene ist, wobei der Tank weiterhin einen Einlass (16) zum Einleiten der Suspension in den Tank und einen Flüssigkeitsauslass (19) enthält, **dadurch gekennzeichnet, dass** der Tank weiterhin eine Mehrzahl von Feststoffauslässen (22) an verschiedenen feststehenden Positionen an dem Boden (3) des Tanks zum Entfernen der Feststoffe, die in dem Tank abgetrennt werden, enthält.

2. Tank nach Anspruch 1, bei dem der untere Bereich einen Boden besitzt, der ungefähr auf einer Ebene ist.

3. Tank nach einem der Ansprüche 1 oder 2, bei dem der untere Bereich eine Höhe geringer als die des oberen Bereichs hat.

4. Tank nach einem der Ansprüche 1 oder 2, bei dem der untere Bereich eine Höhe von weniger als 1 m hat.

5. Tank nach einem der vorhergehenden Ansprüche, bei dem die Gesamthöhe des Tanks weniger als 2,5 m beträgt.

6. Tank nach einem der vorhergehenden Ansprüche, bei dem die Mehrzahl von Feststoffauslässen (22) durch eine Mehrzahl von Auslässen in Seiten- oder Stirnwänden in der Nähe des Bodens des Tanks definiert ist.

7. Tank nach Anspruch 6, bei dem die Auslässe (22) mit einer Distanz von nicht mehr als dem Zweifachen der örtlichen Höhe des unteren Bereichs beabstandet sind.

8. Tank nach einem der vorhergehenden Ansprüche, weiterhin enthaltend Hebevorrichtungen (4, 21), um zu ermöglichen, dass der Tank mit lasthandhabender Ausrüstung in Eingriff gebracht wird.

9. Tank nach Anspruch 8, bei dem die Hebevorrichtungen Aufhängeösen (21) für einen Eingriff mit Kranhaken enthalten.

10. Tank nach Anspruch 8 oder 9, bei dem die Hebevorrichtungen Hebekanäle (4) für einen Eingriff mit Gabeln eines Gabelstaplers enthalten.

11. Verfahren zum Abtrennen von Feststoffen aus einer Suspension von den Feststoffen in einer Flüssigkeit, wobei das Verfahren die folgenden Schritte enthält:
Vorsehen eines Tanks mit einem oberen Bereich, der eine Vielzahl von geneigten Platten (9) enthält, und einem unteren Bereich mit einem Boden (3), der ungefähr auf einer Ebene ist,
Einfüllen der Suspension der Feststoffe in den Tank, wobei Feststoffe in der Suspension an den geneigten Platten heruntergleiten, und Sammeln der Feststoffe über dem Boden des Tanks,
Entfernen von Flüssigkeit aus dem Tank,
Entfernen von Feststoffen aus dem Tank,
**dadurch gekennzeichnet, dass** die Feststoffe durch eine Mehrzahl von Auslässen (22) an verschiedenen feststehenden Positionen an dem Boden (3) des Tanks aus dem Tank entfernt werden.

12. Verfahren nach Anspruch 11, bei dem die Feststoffe sich in einer Mehrzahl von Anhäufungen auf dem Boden des Tanks sammeln, wobei die Kanten der Anhäufungen durch die Auslässe (22) definiert sind.

13. Verfahren nach Anspruch 11 oder 12, bei dem der Tank wie in den Ansprüchen 1 bis 10 bestimmt ausgebildet ist.

14. Verfahren nach einem der Ansprüche 11 bis 13, weiterhin enthaltend den Schritt des anschließenden Bewegens des Tanks an eine neue Stelle und des Wiederholens der Schritte des Einfüllens, des Entfernens von Flüssigkeit und des Entfernens von Feststoffen an der neuen Stelle.

## Revendications

1. Cuve pour séparer les solides d'une suspension de solides dans un liquide, la cuve ayant une région supérieure contenant une multitude de plaques inclinées (9) et une région inférieure pour collecter les solides qui se déposent depuis la région supérieure, la région inférieure ayant un fond (3) qui est à peu près à l'horizontale, la cuve comportant en outre un orifice d'entrée (16) pour introduire la suspension dans la cuve et un orifice de sortie de liquide (19) **caractérisée en ce que** la cuve comporte en outre une pluralité d'orifices de sortie de solides (22) en différentes positions fixes au fond (3) de la cuve pour retirer les solides séparés dans la cuve.

2. Cuve selon la revendication 1, dans laquelle la région inférieure a un fond qui est à peu près à l'horizontale.

3. Cuve selon la revendication 1 ou 2, dans laquelle la région inférieure a une profondeur inférieure à la région supérieure.

4. Cuve selon la revendication 1 ou 2, dans laquelle la région inférieure a une profondeur inférieure à 1 m.

5. Cuve selon l'une quelconque des revendications précédentes, dans laquelle la profondeur totale de la cuve est inférieure à 2,5 m.

6. Cuve selon l'une quelconque des revendications précédentes, dans laquelle les orifices de sortie de solides (22) sont définis par une pluralité d'orifices de sortie dans des parois latérales ou d'extrémité près du fond de la cuve.

7. Cuve selon la revendication 6, dans laquelle les orifices de sortie (22) sont espacés d'une distance qui ne dépasse pas deux fois la profondeur locale de la région inférieure.

8. Cuve selon l'une quelconque des revendications précédentes, comprenant en outre des dispositifs de levage (4, 21) pour permettre à la cuve d'être saisie par un équipement de manutention de charges.

9. Cuve selon la revendication 8, dans laquelle les dispositifs de levage comprennent des oeilletons de levage (21) destinés à être accrochés par des crochets de grue.

10. Cuve selon la revendication 8 ou 9, dans laquelle les dispositifs de levage comprennent des canaux de levage (4) dans lesquels doit s'engager la fourche d'un chariot élévateur à fourche.

11. Procédé de séparation des solides d'une suspension de solides dans un liquide, le procédé comprenant les étapes consistant à :
prendre une cuve ayant une région supérieure contenant une multitude de plaques inclinées (9) et une région inférieure comportant un fond (3) qui est à peu près plat,
introduire la suspension de solides dans la cuve, les solides présents dans la suspension glissant vers le bas sur les plaques inclinées et s'accumulant sur le fond de la cuve,
retirer le liquide de la cuve,
retirer les solides de la cuve,
**caractérisé en ce que** les solides sont retirés de la cuve par une pluralité d'orifices de sortie (22) en différentes positions fixes au fond (3) de la cuve.

12. Procédé selon la revendication 11, dans lequel les solides s'accumulent en une pluralité de piles au fond de la cuve, les bords de la pile étant définis par les orifices de sortie (22).

13. Procédé selon la revendication 11 ou 12, dans lequel la cuve est conforme à l'une quelconque des revendications 1 à 10.

14. Procédé selon l'une quelconque des revendications 11 à 13, comprenant en outre l'étape consistant à amener la cuve sur un autre site et à répéter les étapes d'introduction, de retrait de liquide et de retrait de solides sur ce nouveau site.
